# FASCICULE DE BREVET EUROPEEN

(11) **EP 0 491 621 B1**
(45) Date de publication et mention de la délivrance du brevet: **22.02.1995**
(21) Numéro de dépôt: 91403429.3
(22) Date de dépôt: 17.12.1991
(51) Int. Cl.: G01D 5/16

(54) **Capteur de position angulaire à magnétorésistances**
Winkelpositionssensor mit magnetfeldabhängigen Widerständen
Angle position sensor with magnetoresistors

(30) Priorité: 19.12.1990 FR 9015964
(43) Date de publication de la demande: 24.06.1992
(73) Titulaire: AEROSPATIALE Société Nationale Industrielle, 75781 Paris Cédex 16 (FR)
(72) Inventeur: Bajat, Thierry, F-06210 Mandelieu (FR); Nesa, Jean, F-06210 Mandelieu (FR); Digoin, Jean-Jacques, F-83600 Les Adrets (FR)
(74) Mandataire: Ilgart, Jean-Christophe

(56) Documents cités:
- DE-A- 2 739 877
- PATENT ABSTRACTS OF JAPAN vol. 9, no. 93 (P-351)(1816) 23 Avril 1991 & JP-A-59 221 616

## Description

L'invention se rapporte à un capteur de position angulaire à magnétorésistances.

Un système à magnétorésistances est décrit dans le brevet américain 4 629 982 par exemple. Une magnétorésistance comporte un aimant permanent et deux résistances électriques variant en fonction du flux magnétique et disposées sous forme d'un assemblage compact. La magnétorésistance est fixée à une pièce fixe ou stator devant laquelle tourne un disque ferromagnétique ou rotor. Ce rotor comporte une structure dentée qui définit un motif périodique sur lui. Le flux magnétique passant à travers chaque résistance varie en fonction de la distance des dents les plus proches à cette résistance. Le pont de résistance devient donc déséquilibré, ce qu'on mesure par un circuit électrique approprié. Le signal obtenu varie suivant une loi de forme plus ou moins sinusoïdale dont la période correspond au pas angulaire d'espacement des dents.

Les magnétorésistances présentent de nombreux avantages, en particulier leur compacité, leur faible coût, leur absence d'entretien ainsi que la faculté de travailler à des températures très différentes de l'ambiante et en particulier des températures très basses sans que leurs caractéristiques soient affectées. Elles entraînent cependant des inconvénients. Un des plus notables est qu'elles produisent des couples sur le rotor et l'arbre qui le porte, si bien que les mesures de position angulaire sont perturbées et qu'on ne peut obtenir des résultats très précis, surtout si la pièce portant le rotor est actionnée par un moteur présentant un faible couple résiduel ou moteur. Comme d'autre part l'entrefer entre le rotor et le stator a une faible valeur, les incertitudes d'usinage ont de fortes répercussions sur les mesures. Enfin, on aimerait dans un certain nombre de cas disposer non pas seulement de ce qu'on appelle l'angle électrique entre le rotor et le stator (rappelons que 360° électriques correspondent à un pas de structure du rotor) mais aussi de l'angle mécanique que font ces deux pièces.

Ces trois inconvénients peuvent être supprimés en mettant en oeuvre l'invention, qui comprend sous sa forme la plus générale un capteur de position angulaire comportant un rotor ferromagnétique denté et un stator, le capteur étant caractérisé en ce qu'il comprend des magnétorésistances en nombre pair sur le stator, les magnétorésistances étant réparties en paires de telle sorte que les magnétorésistances de chaque paire sont en opposition de phase électrique. L'opposition de phase électrique annule les couples auxquels le rotor est exposé.

Comme il est assez difficile de produire directement un stator approprié, on préconise de monter les magnétorésistances sur des supports liés au stator par des moyens de fixation démontables permettant de régler séparément les positions des magnétorésistances le long du stator. Un moyen possible pour cela consiste à prévoir des stators avec des glissières entre lesquelles les supports des magnétorésistances peuvent glisser ainsi qu'une bande externe joignant les glissières, la bande externe étant pourvue de perçages oblongs et allongés le long du stator. Les supports des magnétorésistances comportent alors des tiges filetées dépassant du rotor à travers les perçages. Il est alors facile de fixer les supports par des écrous engagés sur les tiges et de régler manuellement la position des supports en déplaçant les tiges dans les perçages oblongs.

L'influence néfaste d'irrégularités d'usinage et notamment de battements de l'arbre du rotor peut être annulée si les magnétorésistances de chaque paire sont disposées à des positions du stator faisant des angles d'au moins 120° mécaniques (ou d'au plus 240° mécaniques à cause de la symétrie) et si possible proches de 180° mécaniques.

Il est avantageux que les magnétorésistances soient au nombre de quatre. On constate en effet que le signal délivré par une magnétorésistance comporte des parties sensiblement linéaires sur la moitié de son étendue, de part et d'autre des positions auxquelles les dents sont placées symétriquement par rapport aux résistances, et qui sont séparées par des parties de signaux courbes difficilement utilisables. Il est alors avantageux de disposer de deux paires de magnétorésistances dont chacune des paires est conforme aux critères qui précèdent, les magnétorésistances des paires respectives étant situées à des angles de 90° électriques.

Le troisième inconvénient évoqué peut être éliminé en ajoutant un moyen de détection de la position absolue entre le rotor et le stator, qui peut consister en au moins une magnétorésistance supplémentaire sur le rotor qui est sensible à un motif en relief sur une face plane latérale du rotor. La réalisation préférée d'un tel système consiste en deux magnétorésistances supplémentaires décalées d'un angle mécanique différent de 0° ou 180° ; le motif consiste en deux reliefs en dent de scie s'étendant chacun sur 180° mécaniques complémentaires et sur des couronnes adjacentes, chacune des deux résistances de chaque magnétorésistance s'étendant devant une couronne respective.

Parmi l'art antérieur relativement proche de l'invention, DE-A-27 39 877 décrit un capteur à rotor ferromagnétique et deux détecteurs espacés de 90° électriques pour fournir des impulsions régulières , et JP-A-59 221 616 décrit un capteur composé d'un rotor à pôles de signes alternés et de seize détecteurs régulièrement espacés sur 360° électriques.

On va maintenant décrire l'invention plus en détail à l'aide des figures suivantes annexées à titre illustratif et nullement limitatif d'une réalisation préférée de l'invention :
- la figure 1 représente une vue d'ensemble du capteur ;
- la figure 2 représente le détail d'une magnétorésistance ;
- la figure 3 représente un détail du stator et du montage des magnétorésistances ;
- la figure 4 représente une vue latérale du rotor et du stator montrant en particulier la disposition des magnétorésistances ;
- les figures 5A, 5B et 5C représentent trois états du rotor face aux magnétorésistances ;
- la figure 6 représente les signaux obtenus ;
- la figure 7 représente l'adaptation de magnétorésistances supplémentaires pour obtenir un capteur de position absolue ; et
- la figure 8 représente les signaux obtenus à l'aide du capteur de la figure 7.

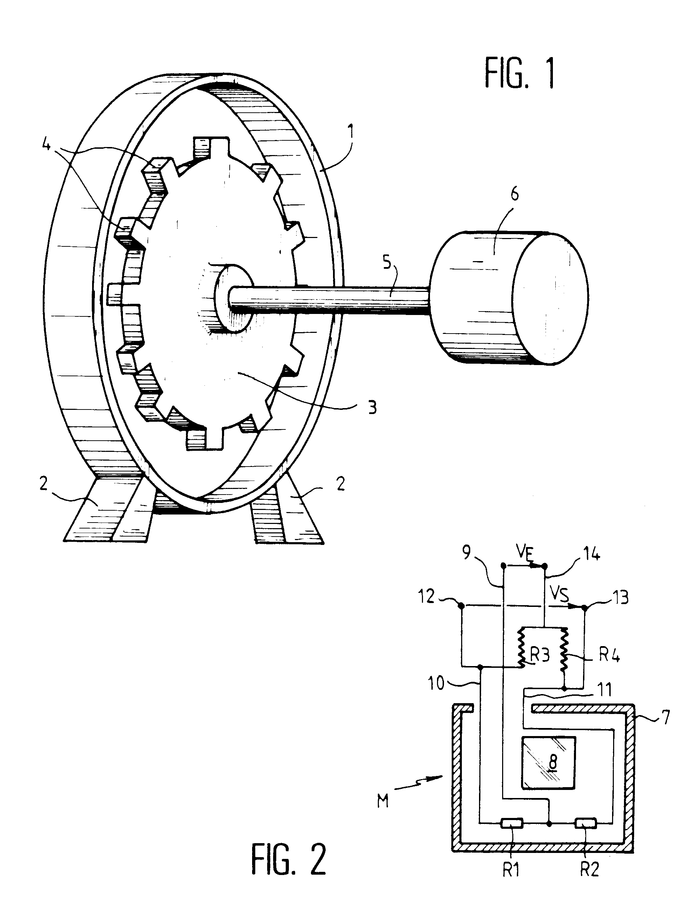

Le capteur de position angulaire conforme à l'invention comprend selon la figure 1 un stator 1 fixé à une structure fixe par des points d'ancrage 2 et un rotor 3 en forme de disque et pourvu à sa périphérie externe de dents 4 régulièrement réparties que le stator 1 entoure. Le rotor 3 est mû par un arbre 5 d'un moteur 6 ou d'un autre mécanisme. Dans cette disposition, le stator 1 et le rotor 3 sont concentriques et s'étendent dans le même plan, contrairement au brevet américain cité plus haut dans lequel le rotor et le stator étaient séparés par un entrefer plan d'épaisseur uniforme. Cependant, dans les deux inventions, les rotors sont ferromagnétiques.

On passe maintenant au commentaire de la figure 2. Chaque magnétorésistance M comprend, encapsulé dans un boîtier 7, un aimant permanent 8 et deux résistances R1 et R2 situées symétriquement par rapport à l'aimant 8 et dont la résistance varie en fonction du flux magnétique qui les baigne. Le boîtier 7 est percé pour livrer passage à des fils électriques dont un fil 9 de mesure joint directement les deux résistances R1 et R2 et deux fils 10 et 11 d'alimentation qui relient respectivement les résistances R1 et R2 aux bornes 12 et 13 d'un appareil d'alimentation non représenté apte à produire une tension constante VS entre les bornes 12 et 13. Il existe un fil supplémentaire 14 qui rejoint, par l'intermédiaire d'une résistance respective R3 ou R4 (ces résistances étant facultatives), chacun des fils 10 et 11 d'alimentation. Les résistances R3 et R4 ont la même valeur. La tension entre les fils 9 et 14 est une tension VE de mesure.

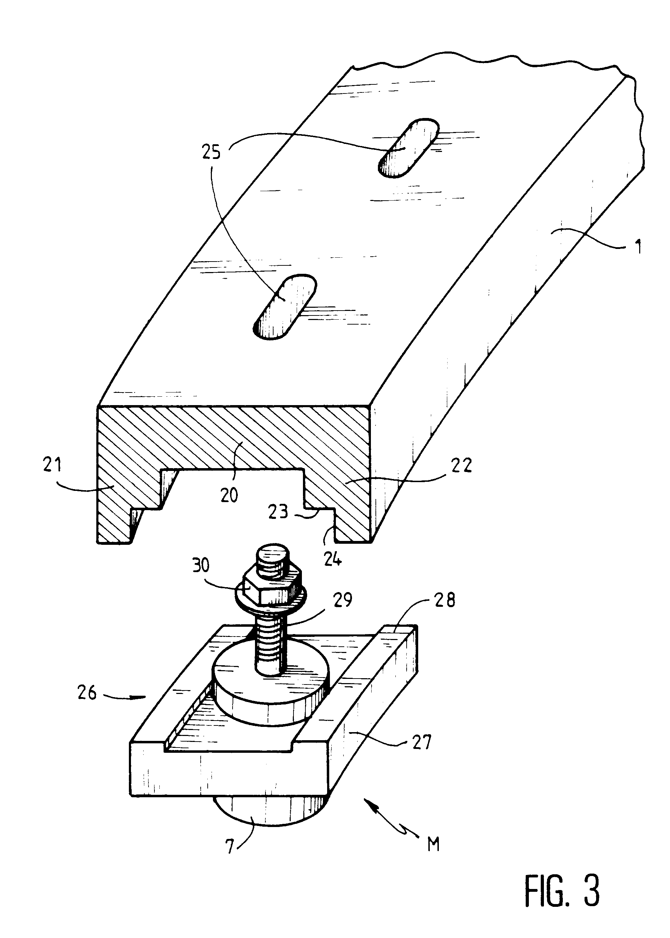

La constitution mécanique des magnétorésistances M et du stator 1 est plus précisément présentée à la figure 3. Le stator 1 est donc une couronne qui comprend un bord externe 20 qui joint deux glissières latérales 21 et 22 symétriques par rapport au plan médian du stator 1 (et du rotor 3). Chacune des glissières comprend une face d'appui radiale 23 orientée vers l'intérieur et une face d'appui longitudinale 24, ces deux faces longitudinales 24 se faisant face. Le bord extérieur 20 est par ailleurs percé de perçages oblongs 25 en nombre égal à celui des magnétorésistances et dont la plus grande dimension s'étend suivant la longueur ou la circonférence du stator 1. Quant aux magnétorésistances M, leur boîtier 7 est enchâssé dans un support 26 comprenant deux faces latérales externes 27 destinées à glisser contre les faces d'appui latérales 24 et des faces internes 28 en saillie destinées à glisser contre les faces d'appui radiales 23. Les supports 26 peuvent donc coulisser le long du stator 1. Toutefois, ces mouvements de coulissement sont limités par une tige filetée 29 encastrée dans chaque boîtier 7 et qui, dans la position de montage de la magnétorésistance M, s'étend dans un perçage oblong respectif 25 pour le traverser de part en part et déboucher à l'extérieur du stator 1. Il suffit alors d'engager un écrou 30 sur la tige filetée 29 pour bloquer la magnétorésistance M sur le stator 1. Cette position peut être réglée finement en déplaçant la tige filetée 29 dans le perçage oblong 25 pour respecter critères qui vont être indiqués.

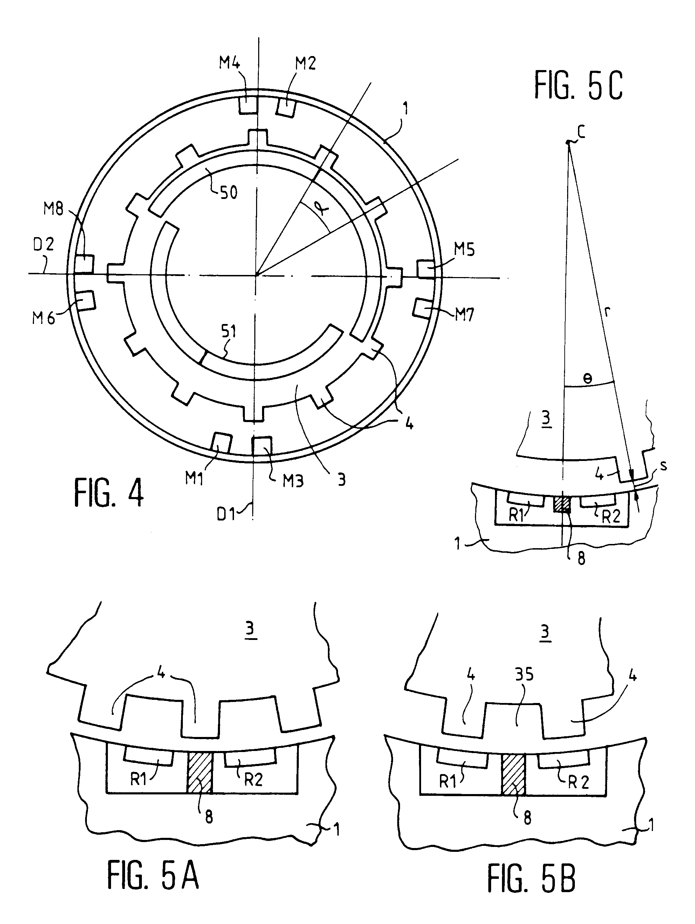

On se reporte maintenant à la figure 4. Dans la réalisation préférée, le capteur comporte huit magnétorésistances M1 à M8 réparties suivant quatre paires : on distingue les paires formées par les magnétorésistances M1 et M2, M3 et M4, M5 et M6, et finalement M7 et M8. On remarque quelques principes de placement particuliers : tout d'abord, les magnétorésistances M de chaque paire sont à peu près diamétralement opposées, ce qui a pour objet d'atténuer les conséquences des battements ou des excentricités du rotor et du stator. Par ailleurs, chaque magnétorésistance M est proche d'une magnétorésistance d'une autre paire. Plus précisément, les magnétorésistances M1 et M3 sont proches, de même que M2 et M4, M5 et M7, et finalement M6 et M8. Les quatre premières sont situées dans des portions opposées du stator 1 près d'un diamètre D1 et les quatre dernières sur des portions du stator 1 opposées prés d'un diamètre D2 orthogonal au précédent.

Tous les effets techniques de l'invention peuvent être obtenus avec quatre magnétorésistances telles que M1 et M4. On en utilise huit ici pour obtenir une redondance. Nous allons maintenant nous intéresser plus en détail aux règles de placement des quatres magnétorésistances M1 à M4. Signalons au passage que les motifs en relief 50 et 51 qui font le tour de la face latérale illustrée du rotor 3 seront décrits plus tard.

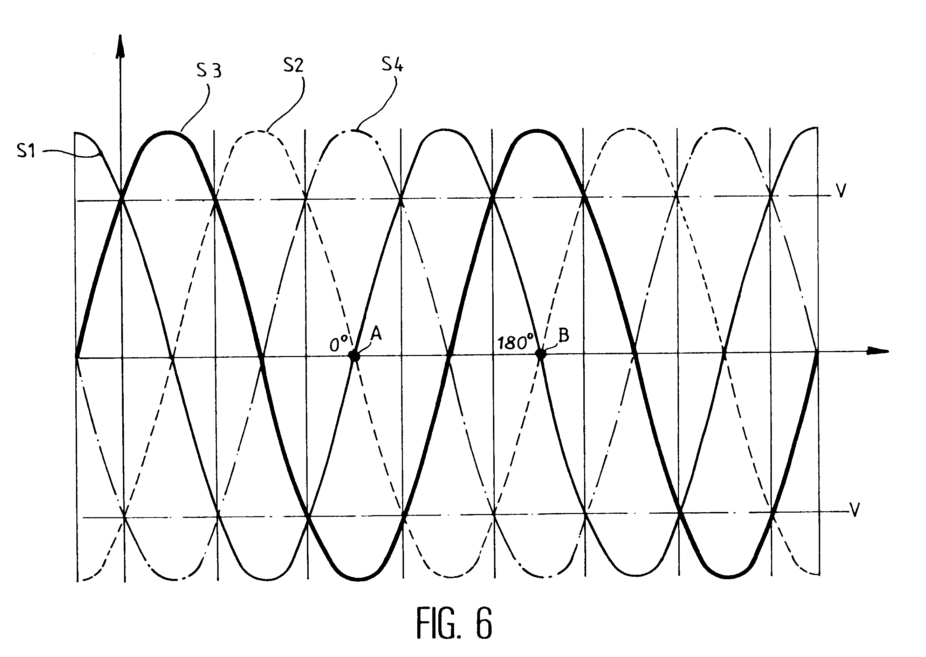

La figure 5A représente une situation où une des dents 4 est située juste devant l'aimant 8, symétriquement par rapport à chacune des résistances R1 et R2. On conçoit que les résistances R1 et R2 auront la même valeur à ce moment. Si on impose une petite rotation au rotor 3 de sorte que l'aimant 8 soit face à un creux 35 entre deux dents 4 consécutives, on obtiendra une autre situation symétrique où les valeurs des résistances R1 et R2 seront encore égales. Si maintenant on se reporte à la figure 6, où les signaux produits par les magnétorésistances M1 à M4 sont référencés par S1 à S4, on comprend facilement que les positions précédentes correspondent à une demi-période des signaux, par exemple de S1. Cette demi-période est limitée par deux points A et B correspondant aux états des figures 5A et 5B et où le pont est équilibré (signal nul). Or, seule une moitié de ces 180° électriques est utilisable car les parties des signaux S qui sont supérieures en valeur absolue à la valeur V indiquée sur la figure ne peuvent être considérées comme linéaires et sont donc difficilement utilisables. Cela concerne une plage de 90° électriques médiane entre les points A et B. On dispose donc les magnétorésistances M3 et M4 à 90° électriques des magnétorésistances M1 et M2, de manière à conserver toujours une paire de magnétorésistances dont les signaux sont utilisables. Reportons-nous d'autre part à la figure 5C. Si **δ** désigne l'entrefer entre l'extrémité de tête d'une dent 4 et le diamètre interne des aimants 8, r le rayon de tête des dents 4 à partir du point C correspondant au centre du rotor 3, la force d'attraction maximale est égale à B.S/2 »0 pour un entrefer proche de zéro et égal à cette force maximale divisée par le carré de l'entrefer quand ce dernier a des valeurs non négligeables. Si maintenant on suppose qu'il existe un déphasage **ϑ** entre la dent 4 et l'aimant 8, on peut démontrer que le rotor 3 subit un couple de rappel proportionnel à sin **ϑ.** Ce couple de rappel est nuisible car il rend la position du rotor 3 instable et tend à perturber les mesures, surtout dans des situations où on souhaite utiliser des moteurs 6 de faible puissance et de faible couple de freinage, notamment pour les applications spatiales.

On propose donc de placer les magnétorésistances de chaque paire en opposition de phase, c'est-à-dire qu'on obtient des signaux S1 et S2 antisymétriques, de même que les signaux S3 et S4. Les couples que les magnétorésistances M produisent sur le rotor 3 s'annulent donc toujours et ceci pour chaque paire de magnétorésistance M. Pour éliminer l'influence des battements de l'arbre 5 et des erreurs de concentricité, on utilise les différences (S1-S2) ou (S3-S4).

Ces deux conditions sur les angles électriques de déphasage entre les magnétorésistances M se traduisent par des conditions sur les angles mécaniques qui nécessitent une grande finesse de leur réglage mécanique. Il est cependant possible d'obtenir des résultats satisfaisants grâce aux configurations mécaniques évoquées à la figure 3.

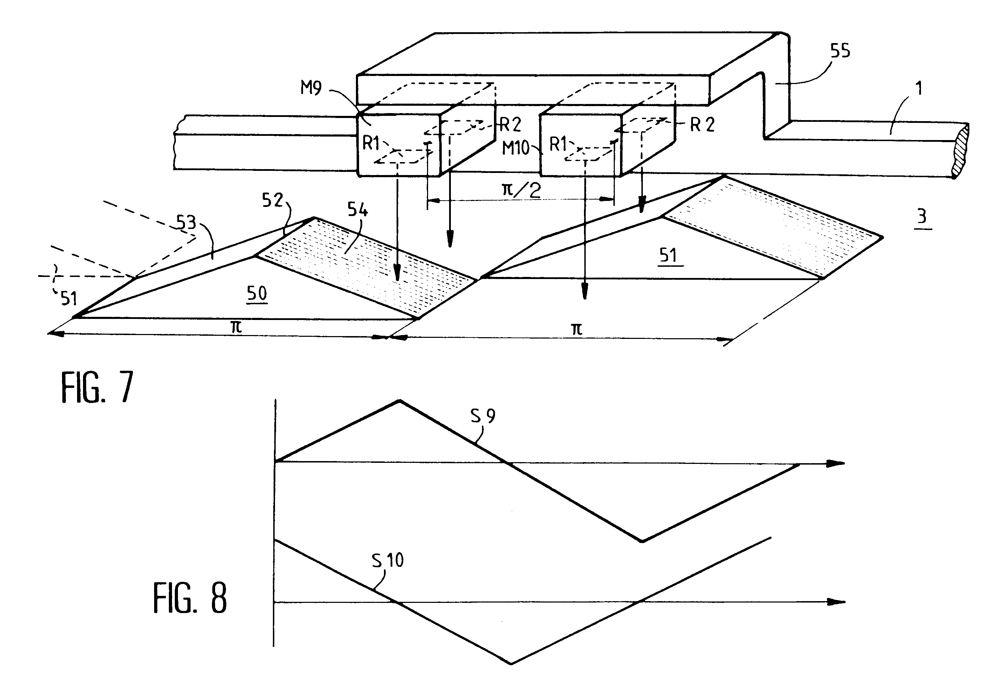

Les motifs en relief 50 et 51 sont représentés également à la figure 7. On a représenté le rotor 3 et le stator 1 en développante pour une représentation plus aisée. Chacun des motifs en relief 50 et 51 est une excroissance en forme de dent de scie comprenant une crête 52 de hauteur maximale et qui sépare deux pentes 53 et 54. Chacun des motifs en relief s'étend sur une demi-circonférence, c'est-à-dire 180° mécaniques, et sur des portions angulaires complémentaires de la face latérale du rotor 3 qui les porte, c'est-à-dire que les motifs 50 et 51 sont situés en prolongement immédiat. Ils sont cependant situés sur des couronnes différentes de la face latérale du rotor 3, c'est-à-dire à des diamètre légèrement différents et présentent donc un léger décalage transversal. Cette circonstance est exploitée par deux magnétorésistances supplémentaires M9 et M10 que porte une potence 55 solidaire du stator 1 de manière que les résistances R1 de chacune des magnétorésistances supplémentaires M9 et M10 soient dirigées vers la couronne portant un des motifs en relief 50 alors que les autres résistances R2 s'étendent devant la couronne sur laquelle s'étend l'autre motif en relief 51. De plus, les magnétorésistances supplémentaires M9 et M10 sont décalées de 90° mécaniques. Les motifs en relief 50 et 51 sont également en matériau ferromagnétique, si bien qu'on obtient les signaux S9 et S10 pour les magnétomètres supplémentaires M9 et M10 en faisant tourner le stator 3 : il s'agit de signaux en dents de scie dont la période est de 360° mécaniques et qui sont décalés de 90° électriques. On constate immédiatement que la comparaison de ces deux signaux permet de connaître la position angulaire exacte du stator 1 et du rotor 3 à un nombre entier de tours près. Il est évident qu'on pourrait trouver bien d'autres moyens de réaliser un tel codage angulaire absolu, et qu'en particulier un décalage de 90° mécaniques n'est pas nécessaire. Il est de même possible de réaliser l'invention de manières différentes. C'est ainsi qu'on pourrait concevoir un rotor et un stator rectilignes et coulissants, car il serait possible d'obtenir l'avantage essentiel de l'invention en disposant des paires de magnétorésitances en opposition de phase.

Un exemple concret de réalisation comporte un rotor 3 de cent dents ayant une largeur de tête de 1,2 mm et séparées par des creux 35 de 2,2 mm de large, la hauteur des dents 4 étant de 2,5 mm. Les magnétorésistances comportent des boîtiers 7 cylindriques de 10 mm de diamètre et d'une hauteur d'environ 10 mm également. Les magnétorésistances M1, M3 et M2, M4 sont séparées de quelques millimètres. Le moteur 6 peut être un moteur pas à pas. Une précision de quelques minutes d'arc, voire d'une dizaine de secondes d'arc, peut être escomptée. Le couple parasite résiduel d'origine magnétique est évalué à environ 1 millinewton/mètre si le réglage des positions des magnétorésistances M est soigné. Des rotors à inertie extrêmement faible, de l'ordre de 100 à 150 millionièmes de kilogramme/mètre carré peuvent être conçus. L'utilisation d'un grand nombre de magnétorésistances utilisées simultanément permet de diminuer encore les erreurs résiduelles qui pourraient subsister. On s'attend d'autre part à une bonne résistance mécanique et une grande durée de vie, même à très faible température ou dans des emplacements soumis à des vibrations. La consommation électrique est d'environ 100 milliwatts pour une masse de quelques centaines de grammes.

## Revendications

1. Capteur de position angulaire comportant un rotor ferromagnétique (3) denté (4) et un stator (1), caractérisé en ce qu'il comprend des magnétorésistances (M1 à M8) en nombre pair sur le stator, les magnétorésistances étant réparties en paires de telle sorte que les magnétorésistances de chaque paire sont en opposition de phase électrique.

2. Capteur de position angulaire suivant la revendication 1, caractérisé en ce que les magnétorésistances (M) sont montées sur des supports (26) liés au stator (1) par des moyens de fixation démontables (25, 29, 30) permettant de régler séparément les positions des magnétorésistances le long du stator.

3. Capteur de position angulaire suivant la revendication 2, caractérisé en ce que le stator (1) comprend des glissières (23, 24) entre lesquelles les supports (26) des magnétorésistances (1) peuvent glisser, ainsi qu'une bande externe (20) joignant les glissières, la bande externe (20) étant pourvue de perçages oblongs (25) et allongés le long du stator, les supports des magnétorésistances comprenant des tiges filetées (29) dépassant du rotor à travers les perçages (25).

4. Capteur de position angulaire suivant l'une quelconque des revendications 1 à 3, caractérisé en ce que les magnétorésistances de chaque paire sont disposées à des positions du stator faisant des angles d'au moins 120° mécaniques et d'au plus 240° mécaniques.

5. Capteur de position angulaire suivant l'une quelconque des revendications 1 à 4, caractérisé en ce que les magnétorésistances sont au nombre de quatre ou d'un multiple de quatre.

6. Capteur de position angulaire suivant les revendications 4 et 5, caractérisé en ce que les magnétorésistances sont disposées à une distance d'une magnétorésistance d'une autre paire formant un angle de 90° électriques.

7. Capteur de position angulaire suivant l'une quelconque des revendications 1 à 6, caractérisé en ce qu'il comporte un moyen de détection de la position absolue entre le rotor et le stator.

8. Capteur de position angulaire suivant la revendication 7, caractérisé en ce que le moyen de détection de la position absolue comprend au moins une magnétorésistance supplémentaire (M9, M10) sur le stator, sensible à un motif en relief (50, 51) sur une face plane latérale du rotor (3).

9. Capteur de position angulaire suivant la revendication 8, caractérisé en ce que les magnétorésistances supplémentaires sont au nombre de deux, décalées d'un angle mécanique différent de 0° ou 180°, le motif consistant en deux reliefs en dent de scie s'étendant chacun sur 180° mécaniques complémentaires et sur des couronnes adjacentes, chacune des deux résistances de chaque magnétorésistance s'étendant devant une couronne respective.

## Claims

1. Detector of angular position comprising a toothed (4) ferromagnetic rotor (3) and a stator (1), characterized in that said stator comprises even numbers of magnetoresistors (M1 to M5), which are positioned in pairs so that the magnetoresistors of each pair are in electrical phase opposition.

2. Angular position detector according to claim 1, characterized in that the magnetoresistors (M) are attached to supports (26) connected to the stator (1) by detachable attachment means (25, 29, 30) allowing the positions of the magnetoresistors to be separately regulated along the stator.

3. Angular position detector according to claim 2, characterized in that said stator (1) has sliders (23, 24) between which the supports (26) of magnetoresistors (1) can slide, as well as an external strip (20) joining the sliders, said external strip (20) having elongate, oblong openings (25) along the stator, with the magnetoresistor supports comprising threaded pins (29) extending beyond the rotor through the openings (25).

4. Angular position detector according to any one of the claims 1 to 3, characterized in that the magnetoresistors in each pair are disposed at stator positions forming mechanical angles between at least 120° and at the most 240°.

5. Angular position detector according to any one of the claims 1 to 4, characterized in that said magnetoresistors number four or a multiple of four.

6. Angular position detector detector according to claims 4 and 5, characterized in that said magnetoresistors are disposed at a distance from a magnetoresistor in another pair which forms a 90° electrical angle.

7. Angular position detector according to any one of the claims 1 to 6, characterized in that it comprises means for detecting the absolute position between the rotor and the stator.

8. Angular position detector according to claim 7, characterized in that said means for detecting absolute position comprises at least one supplementary magnetoresistor (M9, M10) on the stator which is sensitive to a raised pattern (50, 51) on one planar lateral surface of the rotor (3).

9. Angular position detector according to claim 8, characterized in that said supplementary magnetoresistors are two in number, offset at a different mechanical angle of 0° or 180°, the pattern consisting of two serrated raised patterns each extending over a 180° complementary mechanical angle and to adjacent rings, each resistor of each magnetoresistor extending in front of a respective ring.

## Patentansprüche

1. Winkelpositionssensor mit einem ferromagnetischen Rotor (3) mit Zähnen (4) und einem Stator (1), **dadurch gekennzeichnet, daß** er magnetfeldabhängige Widerstände (M1 bis M8) in geradzahliger Anzahl auf dem Stator umfaßt, wobei die magnetfeldabhängigen Widerstände in Paaren so verteilt sind, daß die magnetfeldabhängigen Widerstände von jedem Paar von entgegengesetzter elektrischer Phase sind.

2. Winkelpositionssensor nach Anspruch 1, **dadurch gekennzeichnet, daß** die magnetfeldabhängigen Widerstände (M) auf Trägern (26) angebracht sind, die mit dem Stator (1) mittels entfernbarer Befestigungseinrichtungen (25, 29, 20) verbunden sind, die es erlauben, die Positionen der magnetfeldabhängigen Widerstände entlang des Stators getrennt einzustellen.

3. Winkelpositionssensor nach Anspruch 2, **dadurch gekennzeichnet, daß** der Stator (1) Gleitelemente (23, 24) umfaßt, zwischen denen die Träger (26) der magnetfeldabhängigen Widerstände (M) gleiten können, ebenso wie ein äußeres Band (20), das die Gleitelemente verbindet, wobei das äußere Band (20) mit Löchern (25) versehen ist, die länglich und entlang des Stators ausgerichtet sind, wobei die Träger der magnetfeldabhängigen Widerstände Gewindestangen (29) umfassen, welche über den Rotor durch die Längslöcher (25) hinausreichen.

4. Winkelpositionssensor nach einem der Ansprüche 1 - 3, **dadurch gekennzeichnet, daß** die magnetfeldabhängigen Widerstände von jedem Paar an Stellen des Stators vorgesehen sind, die einen mechanischen Winkel von mindestens 120° und höchstens 240° bilden.

5. Winkelpositionssensor nach einem der vorangegangenen Ansprüche 1 bis 4, **dadurch gekennzeichnet, daß** die magnetfeldabhängigen Widerstände in einer Anzahl von vier oder einem Vielfachen von vier vorgesehen sind.

6. Winkelpositionssensor nach den Ansprüchen 4 und 5, **dadurch gekennzeichnet, daß** die magnetfeldabhängigen Widerstände in einem Abstand von einem Widerstand eines anderen Paares in einem elektrischen Winkel von 90° angeordnet sind.

7. Winkelpositionssensor nach einem der vorangegangenen Ansprüche 1 bis 6, **dadurch gekennzeichnet, daß** er eine Detektoreinrichtung für die Absolutposition zwischen dem Rotor und dem Stator umfaßt.

8. Winkelpositionssensor nach Anspruch 7, **dadurch gekennzeichnet, daß** die Detektoreinrichtung der Absolutposition mindestens einen zusätzlichen magnetfeldabhängigen Widerstand (M9,M10) auf dem Stator umfaßt, der auf ein Reliefmuster (50,51) auf einer ebenen Seitenläche des Rotors (3) empfindlich ist.

9. Winkelpositionssensor nach Anspruch 8, **dadurch gekennzeichnet, daß** die zusätzlichen magnetfeldabhängigen Widerstände in einer Anzahl von zwei vorgesehen sind, die um einen mechanischen Winkel verschieden von Null oder 180° angeordnet sind, wobei das Muster zwei Reliefs von Sägezähnen umfaßt, die sich jeweils um 180° mechanisch komplementär und auf benachbarten Zahnkränzen erstrecken, wobei die beiden Widerstände von jedem magnetfeldabhängigen Widerstand sich vor einem jeweiligen Zahnkranz erstrecken.
